# EUROPEAN PATENT SPECIFICATION

(11) **EP 2 164 023 B1**
(45) Date of publication and mention of the grant of the patent: **17.05.2017**
(21) Application number: 08016019.5
(22) Date of filing: 11.09.2008
(51) Int. Cl.: G06K 7/00

(54) **Enhanced RFID output control**
Verbesserte RFID-Ausgabesteuerung
Contrôle de sortie RFID amélioré

(43) Date of publication of application: 17.03.2010
(73) Proprietor: Rockwell Automation Germany GmbH & Co. KG, 42329 Wuppertal (DE)
(72) Inventor: Lorenz, Dirk, 58300 Wetter (DE)
(74) Representative: Grünecker Patent- und Rechtsanwälte PartG mbB

(56) References cited:
- US-A1- 2006 284 727

## Description

### Background of the Invention

### Field of the Invention

The invention relates to a method, a system, and an apparatus for improving the output control of an RFID system. In particular, the present invention relates to a method, system and an apparatus providing improved output control of an RFID system by utilizing a relationship between a carrier enable signal provided to an RFID reader and a data signal comprising the code of a transponder entering the carrier field of the RFID reader.

### Description of the Related Art

RFID is an acronym for Radio Frequency Identification. RFID is one member in the family of Automatic Identification and Data Capture (AIDC) technologies and is a fast and reliable means of identifying just about any material object. It relies on storing and remotely retrieving data. Primarily, the two main components involved in a radio frequency identification system are the transponder (tags that are attached to the object) and the interrogator (RFID reader). Communication between the RFID reader and tags occurs wirelessly and generally does not require a line of sight between the devices. Some transponders can be read from several meters away.

Most RFID transponders contain at least two parts. One is an integrated circuit (IC) for storing and processing information, modulating and demodulating a (RF) signal, and other specialized functions. The second is an antenna for receiving and transmitting a signal. Accordingly, an RFID transponder, which is considered as a next generation barcode, is a miniscule microchip that is attached to an antenna. The transponders come in a wide variety of sizes, shapes, and forms and can be read through most materials with the exception of conductive materials like water and metal. With modifications and positioning, even these obstacles can be overcome.

Tags may be active or passive. Passive tags are generally smaller, lighter, and less expensive than those that are active, they can be applied to objects in harsh environments, they are maintenance free, and they will last for years. These transponders are only activated when within the response range of a reader. The RFID reader emits a low power electromagnetic wave field which is used to power up the tag to facilitate passing on of any information that is contained on the transponder chip.

Active tags differ in that they incorporate their own power source, wherein the tag is a transmitter rather than a reflector of radio frequency signals, which enables a broader range of functionality, like programmable and read/write capabilities.

An RFID reader typically contains a transmitter and receiver module, a control unit, and a coupling element (antenna). Such a typical reader has three main functions: energizing, demodulating, and decoding. In addition, readers can be fitted with an additional interface that converts the radio waves returned from the RFID tag into a form that can then be passed on to another system like a computer, microcontroller unit, or any programmable logic controller.

In safety engineering, the RFID technology is used, in particular, for non-contact switch devices, e.g., for door monitoring. Here, a predetermined device pair composed of a passive transponder and a reader may be attached to the moveable door and a fixed point of reference. This facilitates monitoring whether a door is closed or open, e.g., in an environment where it is crucial that all doors of the room are closed before safety critical operations are performed inside the room. RFID may also be utilized for access control and general security purposes, providing authentication tags for opening a security door or enabling operation of a specific machine.

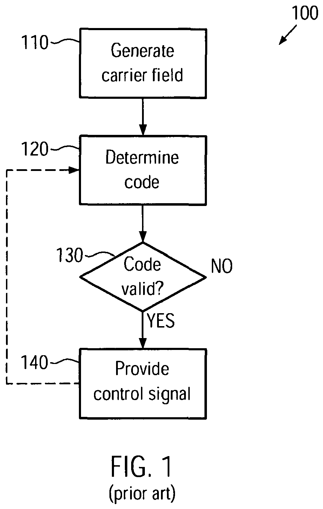

Fig. 1 illustrates a conventional method of employing RFID technology. First, the RFID reader generates a carrier field, step 110. Once an active or passive transponder with an authorized identification code enters the response range of the RFID reader, it either transmits an electromagnetic signal comprising the ID code or influences the carrier field, for example, by means of load modulation. In step 120, the reader attempts to determine a code from the response signal received from the transponder. Once a code is identified, the reader in step 130 determines whether the identified code is valid. This may conventionally be accomplished by comparing the identified code with a code stored in the reader device. The process is repeated as long as the carrier field is powered. If a valid code is determined, the controller module of the RFID reader or of an MCU connected thereto provides a predefined control signal, step 140. This control signal may be utilized to, for example, unlock a door or indicate to a monitoring system whether a specific door is open or closed.

In case of a passive transponder, the transponder is only provided with sufficient energy from the RF field of the reader if the transponder is within a certain energy transfer range of the reader. Once enough energy is transferred from the RF field to the transponder and the transponder is within a response range of the reader, the transponder automatically provides a significant response signal comprising its identification code to the RFID reader. Accordingly, once the transponder has entered the response range of the reader and has received enough energy to transmit its code, the reader device will be able to determine the code and facilitate provision of the assigned control signal.

This kind of RFID system suffers from the basic problem that in the border area of the response range of the reader device, transponders may frequently change their state from a state of not being able to transmit a detectable code to a state of providing a meaningful response signal allowing to detect the identification code of the transponder. This frequent change causes an undesired highly volatile switching of the provided control signal. The resulting effect of switching on and off the provided control signal in a high frequency disturbs the normal operation of the apparatus controlled by the RFID system.

Priorly, this problem has been solved by averaging a multitude of code readings. These prior solutions suffer, however, from the disadvantage of unwanted high reaction times.

US 2006/284,727 (A1), in one embodiment relates to a method for determining the range between an antenna of an interrogator and an electronic tag comprising the steps of: 1) simulating an electronic tag of interest; 2) sending a range command to the electronic tag of interest; 3) detecting a modulated back-scatter response from the electronic tag of interest; 4) measuring a time delay between a transmitted modulated carrier signal from the interrogator and the modulated back-scatter response; 5) calculating a distance between the antenna and the electronic tag using the time delay; and 6) reporting the distance.

### Summary of the Invention

It is the object of the present invention to provide a method, system, and an apparatus facilitating enhanced RFID output control.

This object is solved by the subject matter of the independent claims.

Preferred embodiments are defined in the dependent claims.

A method of distance determination in an RFID system is provided. The method comprises the steps of first switching on a carrier field of an RFID reader, receiving, at the RFID reader, a response signal from a passive RFID transponder located in the carrier field, said response signal comprising a code related to the RFID transponder, detecting said code, and determining a time difference between the switching on of the carrier field and the detection of the code signal. Said time difference provides a measure for the distance between the RFID transponder and the reader.

According to an aspect of the present invention, the carrier field is switched on and off in response to switching on and off a carrier enable signal provided in or to the RFID reader. According to this aspect, the time difference is determined between the switching on of the carrier enable signal and the detection of the code signal.

According to another aspect of the present invention, the carrier field is switched on and off periodically and the time difference determination is performed with respect to the information pair of the last preceding switching on of the carrier field and the subsequent detection of the code signal.

According to yet another aspect of the present invention, a distance may be calculated from the determined time differences. A provided control signal is switched on if the time difference or the calculated distance is smaller than a first predefined threshold value. Subsequently, other time difference or distance determinations may be performed and the provided control signal may be switched off if a subsequently determined time difference or distance is greater than a second predefined threshold value, wherein the second threshold value is greater than the first threshold value, thereby introducing hysteresis into the output control of the RFID system.

According to yet other aspects of the present invention, the control signal may be a safety control signal or a security control signal. The response signal may correspond to a load modulation of the carrier field or to a load modulation with auxiliary carriers in a configuration utilizing inductive coupling. The response signal may also result from a back scatter modulation.

According to yet another aspect of the present invention, an RFID system for distance determination is provided. The system comprises a microcontroller unit, MCU, for providing a carrier enable signal and receiving a data signal, a passive RFID transponder having a code, for providing a response signal comprising the code when being located in a carrier field, and an RFID reader for generating a carrier field in response to a received carrier enable signal, receiving a response signal comprising a code, and providing a data signal comprising a code signal representing the code to the MCU. The MCU determines a time of detection of the code from the data signal and determines a time difference between the switching on of the carrier enable signal or a corresponding response thereto in the received data signal and said time of detection.

According to yet another aspect of the present invention, an apparatus is provided for distance determination in an RFID system. The apparatus comprises means for generating a carrier enable signal, means for providing the carrier enable signal to an RFID reader, means for receiving a data signal comprising a code signal from the RFID reader, wherein the code signal represents the code of a passive RFID transponder located in the carrier field of the RFID reader, means for determining a time of detection of the code from the data signal, and means for determining a time difference between the time of detection and the preceding switching on of the carrier enable signal or a corresponding response thereto in the received data signal. Said time difference provides a measure for the distance between the RFID transponder and the RFID reader.

The present invention is based on the notion that the necessary time for powering up the passive RFID transponder is a function of the distance between the transponder and the antenna of the reader device providing the carrier field.

Thus, monitoring of a time difference between switching on of a carrier field, for example, accomplished by providing a non-constant carrier enable signal, and receipt of a significant code signal provides information on the distance between both devices. Conventional systems provide either a constant carrier field or switch the carrier field off and on due to external conditions of the system, for example to save power. According to the present invention, the carrier field is turned off and on in a controlled and monitored manner allowing to determine the time differences between the start of providing the carrier field and detection of a significant transponder code signal.

The present invention avoids the drawbacks of the prior art solutions and instead provides stable output control. Specifically, the present invention provides for the advantages of not prolonging the reaction time of the controlled system while still avoiding frequent switching on and off of the provided control signal.

The present invention may furthermore be utilized for determining a position of a transponder. A system of reader devices determining the respective distances between each RFID reader and a particular transponder in the inventive manner may be coupled to provide a local positioning system (LPS). Further, the present invention facilitates the provision of a multitude of different or multilevel control signals depending on the distance between the transponder and the reader device. Contactless multi-level switches and gaming device controllers are within the scope of possible applications of the present invention.

### Brief Description of the Drawings

The above and other aspects, features, and advantages of the embodiments of the present invention will become more apparent from the following detailed description taken in conjunction with the accompanying drawings in which:
Fig. 1 is a flowchart illustrating a conventional method of providing output control of an RFID system;
Fig. 2 shows a block diagram illustrating an RFID system for distance determination according to an embodiment of the present invention;
Fig. 3 is a flowchart illustrating a method of distance determination in an RFID system according to an embodiment of the present invention;
Fig. 4 is a flowchart illustrating a method in an RFID system employing a distance hysteresis according to an embodiment of the present invention;
Fig. 5 shows a block diagram illustrating an apparatus for distance determination employing an RFID system;
Fig. 6 shows a diagram illustrating the time dependence of control signal provision in an RFID system according to an embodiment of the present invention; and
Figs. 7 to 9 are diagrams illustrating the time dependency and relationship of a carrier enable signal and a data signal comprising a code signal according to an embodiment of the present invention.

### Detailed Description of Exemplary Embodiments

Exemplary embodiments of the present invention will now be described in detail with reference to the annexed drawings.

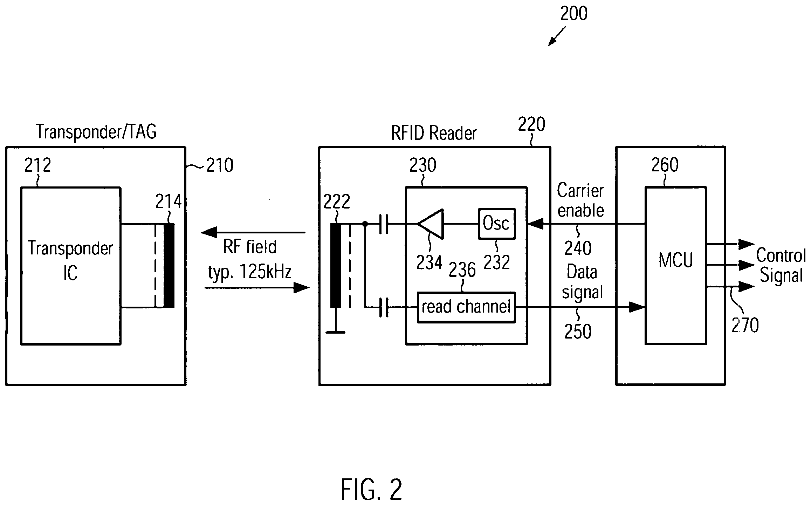

Fig. 2 is a block diagram illustrating an RFID system 200 for distance determination according to an embodiment of the present invention. The system comprises an RFID reader 220, an MCU 260 connected thereto, and a transponder 210. The MCU is illustrated as a separate device, but may also be comprised in the RFID reader. Further, the RFID reader 220 may be an RFID read/write base station. According to the illustrated embodiment, the RFID system 200 employs inductive coupling between the reader and a transponder entering the response range of the generated carrier field. RFID reader 220 comprises a coil antenna module 222 and an integrated circuit 230. Integrated circuit 230 as illustrated comprises on-chip oscillator 232, coil driver 234, and read channel module 236, but is not limited to this particular configuration.

In response to a carrier enable signal 240 provided by MCU 260, the reader 220 generates an electromagnetic carrier field with a typical frequency of 100 to 150 kHz. A frequently employed exemplary frequency of the carrier field is 125 kHz.

The system further comprises an RFID transponder/tag 210 comprising a transponder integrated circuit 212 and a coil antenna module 214. In the illustrated embodiment, if a transponder 210 enters the carrier field generated by RFID reader 220, the transponder 210 is powered up by energy transfer from the carrier field and then inductively couples with the primary coil of the reader, as the distance between both coils is such that the transponder is located in the near field of the antenna module 222 of the reader 220. The resonant transponder 210 extracts energy from the magnetic field of the reader 220. The extracted energy may be measured as a certain voltage drop across an internal resistance of the reader. The switching on and off of a load resistance of the transponder effects specific voltage variations at the antenna module 222 of the reader 220. A binary code signal stored at the transponder 210 controls the switching on and off of this load resistance, thereby transmitting a code signal from the transponder to the reader. This known form of data transmission is called load modulation.

The read channel 236 demodulates an antenna voltage signal of the reader 220 and processes the demodulated signal to generate a data signal 250 comprising the received code signal. The data signal 250 is then provided to MCU 260 for evaluation.

In an embodiment, the identification code is programmed into the transponder integrated circuit 212. Conventionally, the code consists of one bank with four bytes. These bytes are emitted e.g. in Manchester code. In Manchester code, a bit sequence binarily modulates the phasing of a clock signal. Accordingly, Manchester code is one form of digital phase modulation which is also known as phase shift keying (PSK).

In a different embodiment, load modulation with auxiliary carriers may be utilized. In a further possible embodiment, which is not shown in Fig. 2, electromagnetic backscatter coupling may be employed. This technique employs much higher frequencies in the megahertz or gigahertz range and utilizes a modulation of the back scattered signal achieved by modulating the backscatter cross section of the transponder.

The MCU 260 provides the carrier enable signal 240 and receives the data signal 250 comprising the code signal. In accordance with an analysis of both the carrier enable signal 240 and the received data signal 250, a control signal 270 is provided, which may be utilized for safety applications or security applications like access control.

In particular, MCU 260 determines a time of detection of the code from the received data signal 250, and determines a time difference between a switching on of the carrier enable signal 240 or a corresponding response thereto in the received data signal 250 and said time of detection. In the embodiment as illustrated in Fig. 2 utilizing inductive coupling, the efficiency factor of energy transfer between the RFID reader 220 and the transponder 210 is, inter alia, a function of the frequency of the electromagnetic field, the winding count of the transponder coil, the area enclosed by the transponder coil, the angle between the reader coil and the transponder coil, the strength of the magnetic carrier field, and, in particular, the distance between both coils. Accordingly, the determined time difference provides a measure for the distance between the RFID transponder and the RFID reader coil, which approximately corresponds to the position of the RFID reader. Similarly, the energy transfer in a backscatter modulation embodiment also is a function of the distance between a transponder and a reader device.

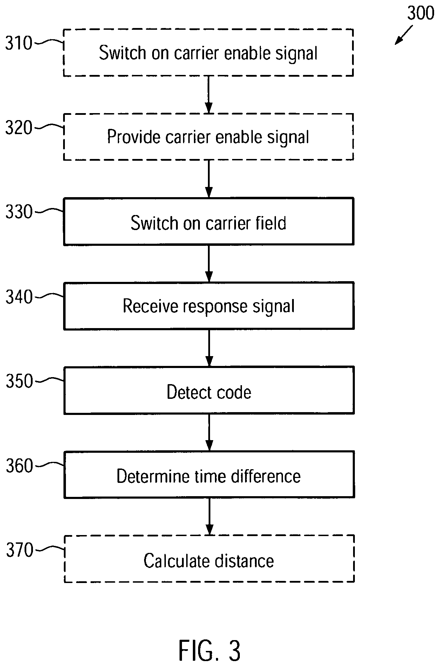

With further reference to Fig. 3 showing a flowchart illustrating a method of distance determination in an RFID system according to an embodiment of the present invention, the following steps are performed. According to one embodiment, first a carrier enable signal is switched on, step 310. The carrier enable signal is then provided to an RFID reader in step 320. The generation and provision of the carrier enable signal may be carried out by a controller module in an RFID reader or by an external MCU. In step 330, the carrier field of the RFID reader is switched on. If a passive RFID transponder enters the carrier field of the RFID reader, that is, the transponder is located in the carrier field, the RFID reader receives a response signal from the transponder, step 340. Said response signal comprises a code related to the RFID transponder. It will be understood that the code may only be determined as valid and detectable if the transponder is close enough to the RFID reader in accordance with the system's specifications and if the transponder code is approved. In step 350, the code of the transponder is detected. According to the detection of the code signal, a time difference between the switching on of the carrier field and the detection of the code signal is determined in step 360. This time difference provides a measure for the distance between the RFID transponder and the RFID reader. In one embodiment, step 370 is performed to calculate a distance between the RFID transponder and the RFID reader on the basis of the determined time difference.

For this calculation, the applicable carrier field characteristics and the power-up characteristics of the passive RFID transponder may be utilized. However, also a relative calculation may be performed where the carrier field is periodically switched on and off and the distance calculation is then performed relative to a greatest determined time difference compared with the respectively determined time difference. The greatest determined time difference herein represents a range where the transponder has just entered a response range of the carrier field. This response range may be known or determined according to the specifications of the RFID reader. However, as the energy transfer is dependent also on the angle between the two coils, any calculated value will have approximating character only.

According to one embodiment of the present invention, the carrier field is periodically switched on and off, and the time difference is determined between a detection of the code signal and a last preceding switching on of the carrier field. As will be understood by one of ordinary skill in the art, the method according to the present invention may also comprise the conventional steps of identifying a code and validating any identified code. If a code is identified to be valid or, if according to another embodiment, every identifiable code is predefined to be valid, and if a determined time difference is smaller than a first predetermined threshold value, a control signal is switched on.

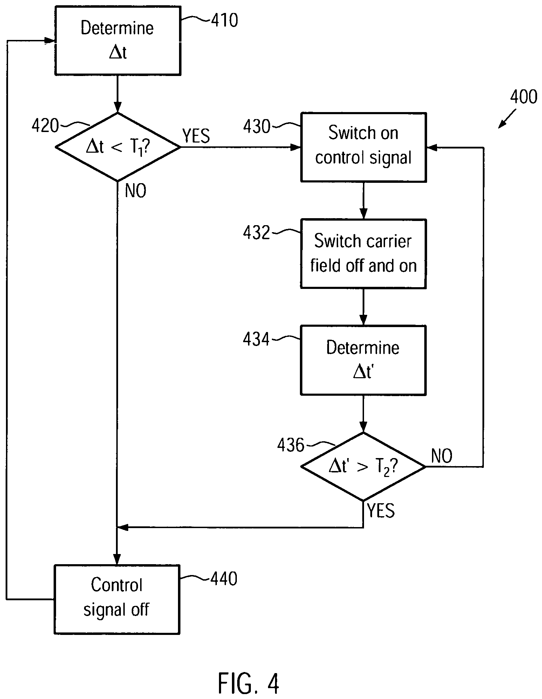

With further reference to Fig. 4 showing a flowchart illustrating a method employing distance hysteresis according to an embodiment of the present invention, the following steps are performed. A first time difference Δt is determined in step 410 according to the method illustrated in Fig. 3. If such a first time difference Δt is determined, it is determined in step 420 whether this Δt is smaller than a first threshold value T₁. If this is not the case, the method proceeds to step 440, and the control signal remains in an off state. The method returns back to step 410 where another time difference Δt is determined.

If it is determined in step 420 that the determined time difference Δt is smaller than the first threshold value T₁, control proceeds to step 430 and the control signal is switched on. It will be understood that this procedure may further comprise the steps of code validation. Control proceeds then to step 432, switching the carrier field off and on, which may be performed periodically. While the control signal is in the status of being switched on, another time difference Δt' is determined in step 434. It is further determined in step 436 whether Δt' is greater than a second threshold value T₂. As long as the result of this determination is negative, control returns back to step 430 and the control signal remains in the switched on status. If the determination, however, is positive, control proceeds to step 440 and the control signal is switched off. Control returns then back to step 410 to determine a new time difference Δt.

By means of this control procedure, a hysteresis is introduced into the output control of the RFID system employing a switch on distance and a switch off distance and a corresponding history of distance determinations with regard to the transponder and the reader. For example, a control signal for access control according to this embodiment of the present invention may be switched on only once a small distance between transponder and reader of 15 millimeters is determined, but may afterwards not be switched off before the distance exceeds 20 millimeters.

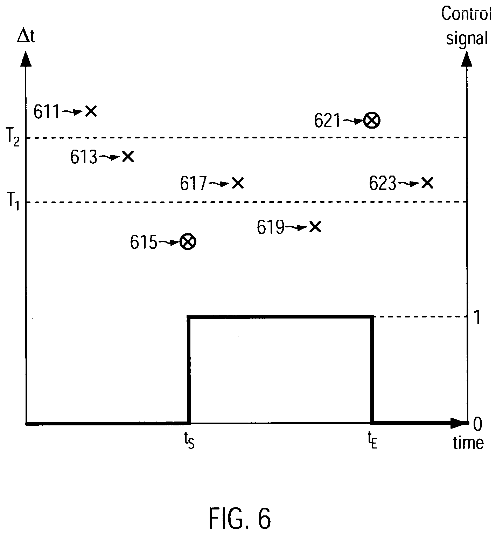

This will now be explained in detail with further reference to Fig. 6 showing a diagram illustrating the method of enhanced output control in an RFID system employing a hysteresis. The diagram shows a sequence of determined time difference values 611 to 623 and the time dependent binary value of an exemplary control signal resulting therefrom in accordance with an embodiment of the present invention. The control signal is switched on at time tₛ, as the time differences 611 and 613 determined before tₛ are greater than the first threshold value T₁ and time difference value 615 determined at tₛ is the first determined time difference which is smaller than T₁. The control signal remains in the switched on state as long as the determined time difference does not exceed the second threshold value T₂. This occurs at time t_{E}, as determined time difference 621 is greater than T₂. The control signal remains thereafter in the switched off state as long as the determined time differences are not smaller than T₁. The time periods between the time difference determinations may be of a periodic or another appropriate nature.

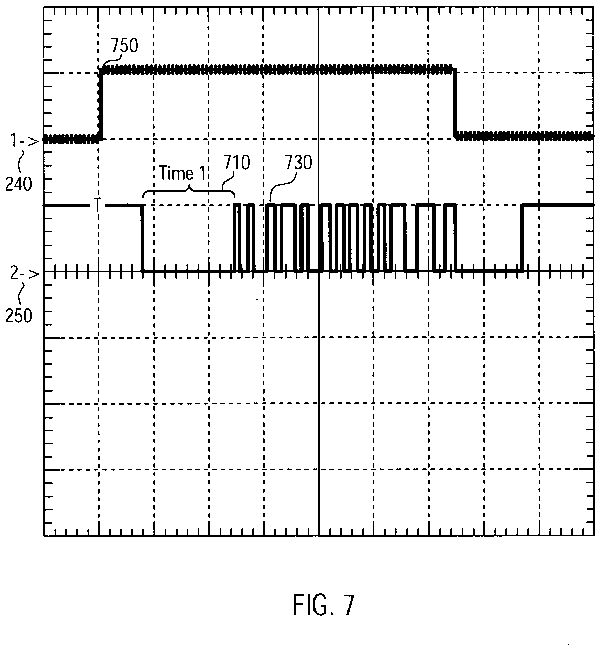

With further reference to Figs. 7 to 9 showing diagrams illustrating the time dependency of the carrier enable signal 240 and the data signal 250 comprising the code signal, the determination of the time differences 710, 810, and 910 will be exemplarily explained in an embodiment of the present invention utilizing the carrier enable signal in unison with the received data signal comprising the code signal. As can be seen from the diagram shown in Fig. 7, first the carrier enable signal is switched on at 750 and remains in the switched on state for a certain period. It is to be noted that Figs. 7 to 9 correspond to an embodiment utilizing inductive coupling. Accordingly, the RFID reader 220 first does not recognize any load while the transponder initially starts to power up. The data signal 250 remains in its default state which in this case corresponds to a binary value of "1". Once the RFID reader recognizes any form of load in the antenna voltage, the data signal 250 switches to the binary value of "0". After a time difference 710, a code 730 is detected by its corresponding load modulation. In the case of Fig. 7, the code 730 is determined to be invalid as it does not match with an approved code pattern. The transponder is located at a distance too far away from the RFID reader to facilitate transmission and detection of a valid code.

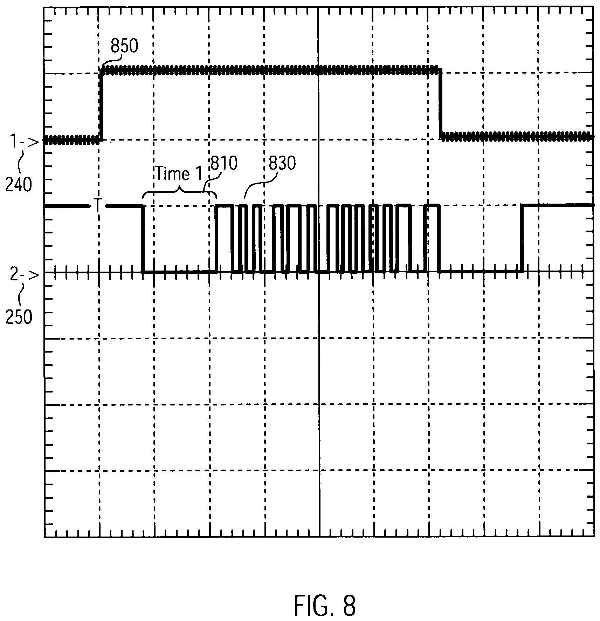

With further reference to Fig. 8, the carrier enable signal is switched on at 850. After a time difference 810 from the point in time where the data signal 250 switches its binary value from "1" to "0", the code signal 830 is detected. This time, the code is determined to be valid. However, as the time difference 810 still exceeds a predefined threshold value, a control signal is not switched on. It will be understood that, as can be seen from Figs. 7 to 9, a time difference may also be determined based on the time of switching on the carrier enable signal 850 and the detection of the code 830 instead of measuring the time interval between the change in the binary data signal 250 from its default value and the subsequent detection of the code signal 830.

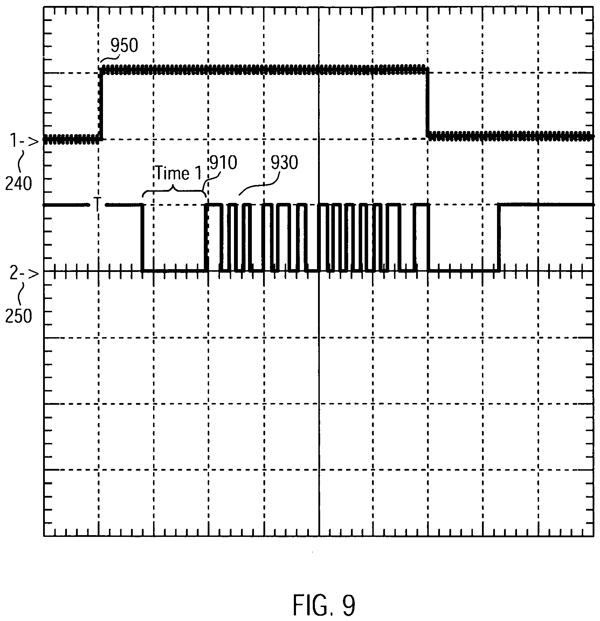

With further reference to Fig. 9, a carrier enable signal is switched on at 950. The determined time difference 910 is smaller than time difference 810. Time difference 910 this time is also smaller than the predefined threshold value for providing the control signal. Therefore, the control signal is switched on. With reference to the exemplary distance values discussed above, Fig. 7 may be understood to relate to a distance of approximately equal to or above 20 millimeters, Fig. 8 may be understood to relate to a distance between 15 and 20 millimeters, and the system configuration related to the situation illustrated in Fig. 9 may be understood to correspond to a distance between the transponder and the RFID reader which is smaller than 15 millimeters.

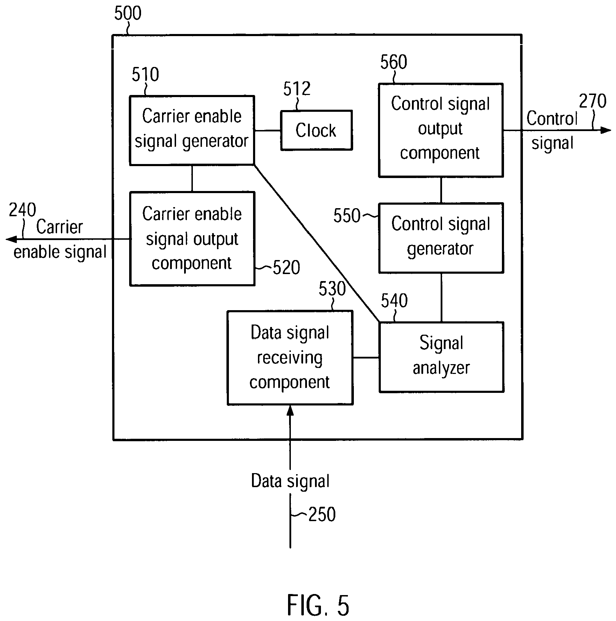

With further reference to Fig. 5 showing a block diagram illustrating an apparatus 500 for distance determination employing an RFID system according to an embodiment of the present invention, the apparatus comprises a means 510 for generating a carrier enable signal. Apparatus 500 may further comprise a means 512 for clocking the carrier enable signal generator 510 so as to provide the carrier enable signal in a periodic or other predefined manner. Further, carrier enable signal output component 520 is comprised to output carrier enable signal 240 to an RFID reader device or an RFID read/write base station. A data signal receiving component 530 is provided for receiving a data signal 250 comprising a code signal from the RFID reader, wherein the code signal represents the code of a passive RFID transponder which is located in the carrier field of the RFID reader. The signal analyzer 540 determines a time of detection of the code from the data signal and determines a time difference between the time of detection and the preceding switching on of the carrier enable signal. Control signal generator 550 generates a control signal on the basis of one or more of said determined time differences. It is to be understood that any of the exemplary above-described control procedures may be employed by control signal generator 550 for the enhanced output control according to the present invention. Control signal output component 560 outputs the generated control signal 270. It will further be understood that the means of apparatus 500 may be implemented as computer-executable components, hardware components, integrated circuit modules, MCU modules, or any combination thereof.

The inventive method, system, and apparatus facilitates enhanced RFID output control while overcoming the disadvantages of previous systems. While the present invention has been shown as described with reference to certain exemplary embodiments thereof, it will be understood by those skilled in the art that various changes in form and detail and combinations may be made therein without departing from the scope of the invention as defined by the appended claims. In addition, those areas in which it is believed that those of ordinary skill in the art are familiar have not been described herein in order to not unnecessarily obscure the invention described herein. Accordingly, it is to be understood that the invention is not to be limited by the specific illustrative embodiments, but only by the scope of the appended claims.

## Claims

1. A method of distance determination in an RFID system (200), the method comprising the steps of:
switching on (330) a carrier field of an RFID reader (220) by means of an antenna (222) of the RFID reader;
powering up a passive RFID transponder by energy transfer from said carrier field;
receiving (340), at the RFID reader, a response signal from the passive RFID transponder (210), said response signal comprising a code related to the RFID transponder;
detecting (350) said code; and determining (360) a time difference between the switching on of the carrier field and the detection of the code, and
calculating (370) a distance between the antenna (222) and the passive RFID transponder from the determined time difference, wherein the calculating is performed on the basis of the carrier field characteristics and the power up characteristics of the passive RFID transponder,
wherein the time necessary to power-up said passive RFID transponder is a function of the distance between the antenna and the passive RFID transponder which is located in the near field of the antenna.

2. The method according to claim 1, further comprising:
switching on (310) a carrier enable signal (240),
wherein the switching on a carrier field comprises switching on a carrier field in response to the carrier enable signal; and
the determining a time difference comprises determining a time difference (810; 910) between the switching on (850; 950) of the carrier enable signal and the detection of the code signal (830; 930).

3. The method according to claim 1 or 2, further comprising the step of
periodically switching the carrier field off and on,
wherein the step of determining comprises determining the time difference between a detection of the code signal and the last preceding switching on of the carrier field.

4. The method according to one of claims 1 to 3, further comprising the steps of:
identifying and validating the code; and
if the code is valid, switching a control signal (370) on if the time difference is smaller than a first threshold value.

5. The method according to claim 4, further comprising the step of:
subsequently determining (434) another time difference for the same code; and
switching the control signal off if the subsequently determined time difference is greater than a second threshold value,
wherein the second threshold value is greater than the first threshold value.

6. The method according to claim 1, wherein the carrier field is periodically switched on and off and the calculating is performed relative to a greatest determined time difference, which represents a predetermined response range of the carrier field.

7. The method according to one of claims 4 to 6, wherein the control signal is a safety control signal or a security control signal.

8. The method according to one of claims 1 to 7, wherein the response signal corresponds to a load modulation of the carrier field or a backscatter modulation of the carrier field.

9. An RFID system (200) for distance determination comprising:
a microcontroller unit (260), MCU, for providing a carrier enable signal (240) and receiving a data signal (250);
a passive RFID transponder (210) having a code, for providing a response signal comprising the code when being located in a carrier field; and
an RFID reader (220) for generating a carrier field in response to a received carrier enable signal (240), receiving a response signal comprising a code, and providing a data signal (250) comprising a code signal representing the code to the MCU;
wherein said passive RFID transponder is powered up by energy transfer from the carrier field switched on (330) by means of an antenna (222) of the RFID reader to provide the response signal,
wherein the time necessary to power up said passive RFID transponder is a function of the distance between the antenna and the passive RFID transponder which is located in the near field of the antenna, and
wherein the MCU determines a time of detection of the code (830; 930) from the data signal, and determines a time difference (810; 910) between a switching on of the carrier field and said time of detection, wherein the determined time difference is used to calculate a distance between the RFID transponder and the RFID reader, and wherein the calculating is performed on the basis of the carrier field characteristics and the power up characteristics of the passive RFID transponder.

10. The system according to claim 9, the MCU further comprising
means for periodically providing the carrier enable signal, and/or
means for providing a control signal (270) on the basis of one or more of said determined time differences.

11. The system according to claim 9 or 10, further comprising
means for identifying and validating a code.

12. An apparatus (500) for distance determination in an RFID system, the apparatus comprising:
means (510) for generating a carrier enable signal (240);
means (520) for providing the carrier enable signal to an RFID reader (220);
means (530) for receiving a data signal (250) comprising a code signal from the RFID reader, wherein the code signal represents the code of a passive RFID transponder located in the carrier field of the RFID reader;
means (540) for determining a time of detection of the code from the data signal;
means (540) for determining a time difference between the time of detection and a preceding switching on of the carrier field said time difference providing a measure for the distance between the RFID transponder and the RFID reader; and means for calculating a distance from the determined time difference, wherein the calculating is performed on the basis of the carrier field characteristics and the power up characteristics of the passive RIFD transponder;
wherein said passive RFID transponder is powered up by energy transfer from the carrier field switched on (330) by means of an antenna (222) of the RFID reader to provide the data signal comprising the code signal, and
wherein the time necessary to power up the passive RFID transponder is a function of the distance between the antenna and the passive RFID transponder which is located in the near field of the antenna.

13. The apparatus according to claim 12, further comprising
means (512) for periodically providing the carrier enable signal, and/or
means (550, 560) for providing a control signal (270) on the basis of one or more of said determined time differences.

## Patentansprüche

1. Verfahren der Abstandermittlung in einem RFID-System (200), wobei das Verfahren die nachstehenden Schritte umfasst:
Einschalten (330) eines Trägerfeldes eines RFID-Lesers (220) mittels einer Antenne (222) des RFID-Lesers;
Einschalten eines passiven RFID-Transponders durch Energieübertragung von dem Trägerfeld;
Empfangen (340), an dem RFID-Leser, eines Antwortsignals von dem passiven RFID-Transponder (210), wobei das Antwortsignal einen Code umfasst, der mit dem RFID-Transponder in Verbindung steht;
Erfassen (350) des Codes; und Ermittlung (360) einer Zeitdifferenz zwischen dem Einschalten des Trägerfeldes und dem Erfassen des Codes, und
Berechnen (370) eines Abstand zwischen der Antenne (222) und dem passiven RFID-Transponder aus der ermittelten Zeitdifferenz, wobei die Berechnung auf Basis der Trägerfeld-Charakteristiken und der Einschalt-Charakteristiken des passiven RFID-Transponders durchgeführt wird,
wobei die Zeit, die erforderlich ist, um den passiven RFID-Transponder einzuschalten, eine Funktion des Abstandes zwischen der Antenne und dem passiven RFID-Transponder ist, der sich im Nahfeld der Antenne befindet.

2. Verfahren nach Anspruch 1, des Weiteren umfassend:
Einschalten (310) eines Träger-Freigabesignals (240),
wobei das Einschalten eines Trägerfeldes das Einschalten eines Trägerfeldes als Antwort auf das Träger-Freigabesignal umfasst; und
die Ermittlung einer Zeitdifferenz die Ermittlung einer Zeitdifferenz (810; 910) zwischen dem Einschalten (850; 950) des Träger-Freigabesignals und der Erfassung des Codesignals (830; 930) umfasst.

3. Verfahren nach Anspruch 1 oder 2, das des Weiteren den Schritt des periodischen Ein-und Ausschalten des Trägerfeldes umfasst,
wobei der Schritt der Ermittlung die Ermittlung der Zeitdifferenz zwischen einem Erfassen des Codesignals und dem letzten vorhergehenden Einschalten des Trägerfeldes umfasst.

4. Verfahren nach einem der Ansprüche 1 bis 3, das des Weiteren die nachstehenden Schritte umfasst:
Identifizieren und Bewerten des Codes; und
wenn der Code zulässig ist, Einschalten eines Steuersignals (370), wenn die Zeitdifferenz kleiner als ein erster Schwellenwert ist.

5. Verfahren nach Anspruch 4, das des Weiteren den nachstehenden Schritt umfasst:
anschließende Ermittlung (434) einer anderen Zeitdifferenz für den gleichen Code; und
Ausschalten des Steuersignals, wenn die anschließend ermittelte Zeitdifferenz größer als ein zweiter Schwellenwert ist,
wobei der zweite Schwellenwert größer als der erste Schwellenwert ist.

6. Verfahren nach Anspruch 1, wobei das Trägerfeld periodisch ein und aus geschaltet wird und die Berechnung in Bezug auf eine größte ermittelte Zeitdifferenz durchgeführt wird, die einen vorausbestimmten Ansprechbereich des Trägerfeldes repräsentiert.

7. Verfahren nach einem der Ansprüche 4 bis 6, wobei das Steuersignal ein Sicherheitssteuersignal oder ein Befugniskontrollsignal ist.

8. Verfahren nach einem der Ansprüche 1 bis 7, wobei das Antwortsignal einer Lastmodulation des Trägerfeldes oder einer Rückstreuungsmodulation des Trägerfeldes entspricht.

9. RFID-System (200) zur Abstandsermittlung, umfassend:
eine Mikrocontroller-Einheit (260), MCU, zur Bereitstellung eines Träger-Freigabesignals (240) und zum Empfangen eines Datensignals (250);
einen passiven RFID-Transponder (210) mit einem Code, zur Bereitstellung eines Antwortsignals, das den Code umfasst, wenn er sich in einem Trägerfeld befindet, und
einen RFID-Leser (220) zum Erzeugen eines Trägerfeldes als Antwort auf ein empfangenes Träger-Freigabesignal (240), zum Empfangen eines Antwortsignals, das einen Code umfasst, und zur Bereitstellung eines Datensignals (250), das ein Codesignal umfasst, das den Code für die MCU repräsentiert;
wobei der passive RFID-Transponder durch Energieübertragung von dem eingeschalteten (330) Trägerfeld mittels einer Antenne (222) des RFID-Lesers eingeschaltet wird, um das Antwortsignal zu liefern,
wobei die Zeit, die erforderlich ist, um den passiven RFID-Transponder einzuschalten, eine Funktion des Abstandes zwischen der Antenne und dem passiven RFID-Transponder ist, der sich im Nahfeld der Antenne befindet, und
wobei die MCU aus dem Datensignal die Zeit der Erfassung des Codes (830; 930) ermittelt, und die Zeitdifferenz (810, 910) zwischen einem Einschalten des Trägerfeldes und der Zeit der Erfassung ermittelt, wobei die ermittelte Zeitdifferenz verwendet wird, um einen Abstand zwischen dem RFID-Transponder und dem RFID-Leser zu berechnen, und wobei die Berechnung auf Basis der Trägerfeld-Charakteristiken und der Einschalt-Charakteristiken des passiven RFID-Transponders durchgeführt wird.

10. System nach Anspruch 9, wobei die MCU des Weiteren umfasst:
Mittel zur periodischen Bereitstellung des Träger-Freigabesignals, und/oder
Mittel zur Bereitstellung eines Steuersignals (270) auf Basis einer oder mehrerer der ermittelten Zeitdifferenzen.

11. System nach Anspruch 9 oder 10, des Weiteren umfassend:
Mittel zur Identifizierung und Bewertung eines Codes.

12. Vorrichtung (500) zur Abstandsermittlung in einem RFID-System, wobei die Vorrichtung umfasst:
eine Einrichtung (510) zur Erzeugung eines Träger-Freigabesignals (240);
eine Einrichtung (520) zur Bereitstellung des Träger-Freigabesignals an einen RFID-Leser (220);
eine Einrichtung (530) zum Empfang eines Datensignals (250), das ein Codesignal von dem RFID-Leser umfasst, wobei das Codesignal den Code eines passiven RFID-Transponders repräsentiert, der sich in dem Trägerfeld des RFID-Lesers befindet,
eine Einrichtung (540) zur Ermittlung eines Zeitpunkts der Erfassung des Codes aus dem Datensignal;
eine Einrichtung (540) zur Ermittlung einer Zeitdifferenz zwischen der Zeit der Erfassung und einem vorhergehenden Einschalten des Trägerfelde, wobei die Zeitdifferenz ein Maß für den Abstand zwischen dem RFID-Transponder und dem RFID-Leser liefert; und eine Einrichtung zum Berechnen eines Abstands aus der ermittelten Zeitdifferenz, wobei die Berechnung auf Basis der Trägerfeld-Charakteristiken und der Einschalt-Charakteristiken des passiven RIFD-Transponders durchgeführt wird;
wobei der passive RFID-Transponder durch Energieübertragung von dem eingeschalteten Trägerfeld (330) mittels einer Antenne (222) des RFID-Lesers übertragen wird, um das Datensignal bereitzustellen, das das Codesignal umfasst, und
wobei die Zeit, die erforderlich ist, um den passiven RFID-Transponder einzuschalten, eine Funktion des Abstandes zwischen der Antenne und dem passiven RFID-Transponder ist, der sich im Nahfeld der Antenne befindet.

13. Vorrichtung nach Anspruch 12, des Weiteren umfassend:
eine Einrichtung (512) zur periodischen Bereitstellung des Träger-Freigabesignals, und/oder
eine Einrichtung (550, 560) zur Bereitstellung eines Steuersignals (270) auf Basis einer oder mehrerer der ermittelten Zeitdifferenzen.

## Revendications

1. Procédé de détermination de distance dans un système RFID (200), le procédé comprenant les étapes consistant à :
activer (330) un champ porteur d'un lecteur RFID (220) au moyen d'une antenne (222) du lecteur RFID ;
démarrer un transpondeur RFID passif par transfert d'énergie depuis ledit champ porteur ;
recevoir (340) au niveau du lecteur RFID un signal de réponse en provenance du transpondeur RFID passif (210), ledit signal de réponse comprenant un code associé au transpondeur RFID ;
détecter (350) ledit code ; et déterminer (360) une différence de temps entre l'activation du champ porteur et la détection du code, et
calculer (370) une distance entre l'antenne (222) et le transpondeur RFID passif à partir de la différence de temps déterminée, où le calcul est effectué en se fondant sur les caractéristiques du champ porteur et les caractéristiques de démarrage du transpondeur RFID passif,
où le temps nécessaire au démarrage dudit transpondeur RFID passif est fonction de la distance entre l'antenne et le transpondeur RFID passif qui est situé dans le champ proche de l'antenne.

2. Procédé selon la revendication 1, comprenant en outre :
l'activation (310) d'un signal d'activation de porteur (240),
où l'activation d'un champ porteur comprend l'activation d'un champ porteur en réponse au signal d'activation de porteur ; et
la détermination d'une différence de temps comprend la détermination d'une différence de temps (810 ; 910) entre l'activation (850 ; 950) du signal d'activation de porteur et la détection du signal de code (830 ; 930).

3. Procédé selon la revendication 1 ou 2, comprenant en outre l'étape consistant à
périodiquement activer et désactiver le champ porteur,
où l'étape de détermination comprend la détermination de la différence de temps entre une détection du code de signal et la dernière activation du champ porteur.

4. Procédé selon l'une des revendications 1 à 3, comprenant en outre les étapes consistant à :
identifier et valider le code ; et
si le code est valide, activer un signal de contrôle (370) si la différence de temps est inférieure à une première valeur seuil.

5. Procédé selon la revendication 4, comprenant en outre l'étape consistant à :
déterminer (434) ultérieurement une autre différence de temps pour le même code ; et
désactiver le signal de contrôle si la différence de temps déterminée ultérieurement est supérieure à une seconde valeur seuil,
où la seconde valeur seuil est supérieure à la première valeur seuil.

6. Procédé selon la revendication 1, où le champ porteur est périodiquement activé et désactivé et le calcul est effectué par rapport à la plus grande différence de temps déterminée qui représente une portée de réponse prédéterminée du champ porteur.

7. Procédé selon l'une des revendications 4 à 6, où le signal de contrôle est un signal de contrôle de sûreté ou un signal de contrôle de sécurité.

8. Procédé selon l'une des revendications 1 à 7, où le signal de réponse correspond à une modulation de charge du champ porteur ou une modulation de rétrodiffusion du champ porteur.

9. Système RIFD (200) pour déterminer une distance comprenant :
une unité de microcontrôleur (260), MCU, pour fournir un signal d'activation de porteur (240) et recevoir un signal de données (250) ;
un transpondeur RFID passif (210) comportant un code pour fournir un signal de réponse comprenant le code lorsqu'il se situe dans un champ porteur ; et
un lecteur RFID (220) pour générer un champ porteur en réponse à un signal d'activation de porteur reçu (240), recevoir un signal de réponse comprenant un code et fournir un signal de données (250) comprenant un signal de code représentant le code à l'MCU ;
où ledit transpondeur RFID passif est démarré par transfert d'énergie en provenance du champ porteur activé (330) au moyen d'une antenne (222) du lecteur RFID afin de fournir le signal de réponse,
où le temps nécessaire pour démarrer ledit transpondeur RFID passif est fonction de la distance entre l'antenne et le transpondeur RFID passif qui est situé dans le champ proche de l'antenne, et
où l'MCU détermine un instant de détection du code (830 ; 930) à partir du signal de données et détermine une différence de temps (810 ; 910) entre une activation du champ porteur et ledit instant de détection, où la différence de temps déterminée est utilisée pour calculer une distance entre le transpondeur RFID et le lecteur RFID, et où le calcul est effectué en se fondant sur les caractéristiques de champ porteur et les caractéristiques de démarrage du transpondeur RFID passif.

10. Système selon la revendication 9, l'MCU comprenant en outre
des moyens pour fournir périodiquement le signal d'activation de porteur, et/ou
des moyens pour fournir un signal de contrôle (270) en se fondant sur une ou plusieurs desdites différences de temps déterminées.

11. Système selon la revendication 9 ou 10, comprenant en outre des moyens pour identifier et valider un code.

12. Appareil (500) pour déterminer une distance dans un système RFID, l'appareil comprenant :
des moyens (510) pour générer un signal d'activation de porteur (240) ;
des moyens (520) pour fournir le signal d'activation de porteur à un lecteur RFID (220) ;
des moyens (530) pour recevoir un signal de données (250) comprenant un signal de code en provenance du lecteur RFID, où le signal de code représente le code d'un transpondeur RFID passif situé dans le champ de porteur du lecteur RFID ;
des moyens (540) pour déterminer un instant de détection du code à partir du signal de données ;
des moyens (540) pour déterminer une différence de temps entre l'instant de détection et une activation précédente du champ porteur, ladite différence de temps fournissant une mesure de la distance entre le transpondeur RFID et le lecteur RFID ; et des moyens pour calculer une distance à partir de la différence de temps déterminée, où le calcul est effectué en se fondant sur des caractéristiques de champ porteur et les caractéristiques de démarrage du transpondeur RFID passif ;
où ledit transpondeur RFID passif est démarré par transfert d'énergie à partir du champ porteur activé (330) au moyen d'une antenne (222) du lecteur RFID afin de fournir le signal de données comprenant le signal de code, et
où le temps nécessaire pour démarrer le transpondeur RFID passif est fonction de la distance entre l'antenne et le transpondeur RFID passif qui est situé dans le champ proche de l'antenne.

13. Appareil selon la revendication 12, comprenant en outre
des moyens (512) pour périodiquement fournir le signal d'activation de porteur, et/ou
des moyens (550/560) pour fournir un signal de contrôle (270) en se fondant sur une ou plusieurs desdites différences de temps déterminées.
